# EUROPÄISCHE PATENTSCHRIFT

(11) **EP 3 110 611 B1**
(45) Veröffentlichungstag und Bekanntmachung des Hinweises auf die Patenterteilung: **16.10.2019**
(21) Anmeldenummer: 15704820.8
(22) Anmeldetag: 18.02.2015
(51) Int. Cl.: B29C 65/08, B23K 20/10

(54) **ULTRASCHALLBEARBEITUNGSVORRICHTUNG MIT KRAFTSENSOR**
ULTRASONIC PROCESSING DEVICE HAVING A FORCE SENSOR
DISPOSITIF DE FAÇONNAGE PAR ULTRASONS ÉQUIPÉ D'UN CAPTEUR DE FORCE

(30) Priorität: 28.02.2014 DE 102014102685
(43) Veröffentlichungstag der Anmeldung: 04.01.2017
(73) Patentinhaber: Herrmann Ultraschalltechnik GmbH & Co. KG, 76307 Karlsbad (DE)
(72) Erfinder: VOGLER, Ulrich, 88690 Uhldingen-Mühlhofen (DE)
(74) Vertreter: WSL Patentanwälte Partnerschaft mbB
(86) Internationale Anmeldenummer: PCT/EP2015/053424
(87) Internationale Veröffentlichungsnummer: WO 2015/128236

(56) Entgegenhaltungen:
- EP-A1- 0 421 019
- EP-A1- 0 920 977
- WO-A1-2016/074983
- DE-A1- 4 101 545
- DE-A1- 19 803 638
- JP-A- 2006 231 698

## Beschreibung

Die vorliegende Erfindung betrifft eine Vorrichtung zum Ultraschallbearbeiten einer Materialbahn.

Solche Ultraschallbearbeitungsvorrichtungen weisen eine Ultraschallschwingeinheit bestehend aus einer Sonotrode, einem Konverter und gegebenenfalls einen Amplitudentransformator auf. Der Konverter ist dabei gegebenenfalls über den Amplitudentransformator mit der Sonotrode verbunden. Der Konverter wandelt eine elektrische Wechselspannung in eine mechanische Schwingung um. Die einzelnen Elemente der Ultraschallschwingeinheit sind derart aufeinander abgestimmt, dass die Ultraschallschwingeinheit bei der gewünschten Ultraschallfrequenz eine Resonanzfrequenz, die sogenannte Eigenfrequenz, aufweist. Wird daher der Konverter mit der geeigneten Wechselspannung beaufschlagt, schwingt die Ultraschallschwingeinheit mit der Eigenfrequenz.

Des Weiteren ist ein gegenüber der Sonotrode angeordnetes Gegenwerkzeug vorgesehen. Zur Bearbeitung der Materialbahn wird die Materialbahn durch einen Spalt zwischen Sonotrode und Gegenwerkzeug bewegt. Während der Bearbeitung wird die mit einer Ultraschallfrequenz schwingende Sonotrode in Richtung des Gegenwerkzeuges auf die Materialbahn gedrückt, sodass die Materialbahn zwischen Sonotrode einerseits und Gegenwerkzeug andererseits ultraschallbearbeitet wird.

Zu diesem Zweck ist es notwendig, dass Sonotrode und Gegenwerkzeug relativ zueinander bewegt werden können. So muss beispielsweise der Spalt zwischen Sonotrode und Gegenwerkzeug vergrößert werden, um die Materialbahn in den Spalt einbringen zu können. Während der Bearbeitung wird der Spalt dann entsprechend verkleinert. Daher ist die Ultraschallschwingeinheit an einem Schlitten befestigt, welcher relativ zu dem Gegenwerkzeug bewegbar ist, sodass die Ultraschallschwingeinheit zusammen mit dem Schlitten in Kraftrichtung, d.h. in Richtung des Gegenwerkzeuges oder von diesem weg, bewegt werden kann.

Um ein optimales Bearbeitungsergebnis zu erhalten, ist es von Vorteil wenn die Sonotrode mit einer vorbestimmten Schweißkraft auf die Materialbahn gedrückt wird.

Daher ist bereits in der DE 197 53 740 eine Vorrichtung vorgeschlagen worden, die einen Kraftsensor zum Messen der von der Materialbahn auf die Sonotrode aufgebrachten Kraft aufweist. Bei dieser Vorrichtung wird der Schlitten über ein Kniehebelsystem angetrieben und der Sensor ist innerhalb des Kniehebelsystems angeordnet.

Diese Vorrichtung hat jedoch den Nachteil, dass die Kraftmessung aufgrund von Reibungskräften zwischen Schlitten und Schlittenführung sowie innerhalb des Kniehebelsystems eine große Hysterese aufweist. Darüber hinaus lassen sich mit der bekannten Anordnung Querkräfte, d.h. Kräfte, die die Materialbahn senkrecht zur Kraftrichtung auf die Sonotrode ausübt, nicht messen.

Es gibt jedoch Anwendungsfälle mit einer sehr geringen Prozessbandbreite. Z. B. sind Anwendungen denkbar, die eine Schweißkraft von 200 N erfordern, bei denen bei einer Schweißkraft von nur 195 N keine vollständige Verschweißung mehr erfolgt und bei einer Schweißkraft von 205 N bereits eine partielle Beschädigung des Materials erfolgt.

Diese Anwendungsfälle sind bislang nicht mittels kontinuierlichem Ultraschallbearbeiten handhabbar.

Die DE 198 03 638 A1 beschreibt eine Vorrichtung zum Bearbeiten einer Materialbahn mit Ultraschall, bei der zur Einstellung der Spalthöhe die Kraft in dem Spalt mittels eines Kraftmessgliedes gemessen wird. Die 41 01 545 A1 beschreibt eine Vorrichtung zur Verbindung zweier Bauteile mittels Ultraschall. Die EP 0 421 019 A1 beschreibt ein Verfahren und eine Vorrichtung zum Fügen von Kunststoffteilen durch Ultraschall. Die JP 2006-231698 A zeigt ebenfalls eine Ultraschallschweißvorrichtung.

Ausgehend von dem bekannten Stand der Technik ist es daher Aufgabe der vorliegenden Erfindung, eine Vorrichtung der eingangs genannten Art bereitzustellen, die eine genauere Messung der Schweißkraft ermöglicht, um auch Anwendungsfälle mit extrem kleiner Prozessbandbreite mittels Ultraschall kontinuierlich bearbeiten zu können.

Erfindungsgemäß wird diese Aufgabe durch eine Vorrichtung gemäß Anspruch 1 gelöst.

Erfindungsgemäß wird daher die Position des Kraftsensors vom Kniehebel in Richtung Sonotrode verlegt und zwar in eine Position zwischen Sonotrode und Schlitten. An dieser Position kann der Kraftsensor eine Bewegung der Sonotrode relativ zum Gegenwerkzeug unmittelbar erfassen, die aufgrund einer Änderung der Schweißkraft erfolgt.

In einer bevorzugten Ausführungsform sind Sonotrode und Schlitten über ein zwei Kraftsensoren aufweisendes Sensorbauteil miteinander verbunden. Dabei ist ein Kraftsensor derart angeordnet, dass die von dem zu bearbeitenden Material parallel zur Kraftrichtung auf die Sonotrode aufgebrachte Kraft gemessen wird, während der andere Kraftsensor derart angeordnet ist, dass die von dem zu bearbeitenden Material senkrecht zur Kraftrichtung auf die Sonotrode aufgebrachte Kraft gemessen wird.

Aufgrund der Positionierung des Sensorbauteils in unmittelbarer Nähe zur Sonotrode ist es sogar möglich, mittels zwei Kraftsensoren sowohl die Kraft parallel zur Kraftrichtung als auch die Kraft senkrecht zur Kraftrichtung zu messen. Selbstverständlich können auch mehr als zwei Kraftsensoren eingesetzt werden.

In einer bevorzugten Ausführungsform ist ein Antrieb zum Bewegen des Schlittens parallel zur Kraftrichtung vorgesehen, wobei vorzugsweise der Antrieb über ein Kraftumlenkungssystem, wie zum Beispiel ein Kniehebelsystem, mit dem Schlitten verbunden ist. Eine solche Anordnung ist beispielsweise der bereits zitierten DE 197 53 740 C1 zu entnehmen. Dabei ist der Schlitten derart in einer Führung positioniert, dass er sich relativ zum Maschinenständer nur in Kraftrichtung nicht jedoch senkrecht dazu bewegen kann.

In einer besonders bevorzugten Ausführungsform besteht das Sensorbauteil aus zwei über mindestens zwei elastische Verbindungselemente miteinander verbundenen Plattenelementen, wobei ein Plattenelement mit der Ultraschallschwingeinheit und das andere Plattenelement mit dem Schlitten verbunden ist. Dabei ist am besten der Kraftsensor an einem Verbindungselement befestigt.

Besonders bevorzugt ist eine Ausführungsform, bei der das eine Verbindungselement näher am Gegenwerkzeug angeordnet ist als das andere Verbindungselement, wobei dann vorzugsweise zwei Kraftsensoren vorgesehen sind und ein Kraftsensor derart am Verbindungselement, welches weiter von dem Gegenwerkzeug entfernt angeordnet ist, positioniert ist, dass die von dem zu bearbeitenden Material parallel zur Kraftrichtung auf die Sonotrode aufgebrachte Kraft gemessen wird, und der andere Kraftsensor derart an dem Verbindungselement, welches näher am Gegenwerkzeug angeordnet ist, positioniert ist, dass die von dem zu bearbeitenden Material senkrecht zur Kraftrichtung auf die Sonotrode aufgebrachte Kraft gemessen wird.

Die Verbindungselemente können beispielsweise als elastische Verbindungsstege ausgebildet sein, die die beiden Plattenelemente miteinander verbinden, sodass bei einer von der Materialbahn auf die Sonotrode ausgeübten Kraft es zu einer Relativbewegung der beiden Plattenelemente zueinander kommt, wobei sich die Verbindungselemente verformen.

In einer weiteren bevorzugten Ausführungsform ist vorgesehen, dass mindestens vier Verbindungselemente die Plattenelemente miteinander verbinden, wobei jeweils zwei Verbindungselemente vom Gegenwerkzeug gleich beabstandet sind. Durch die paarweise Anordnung der Verbindungselemente wird der Sensorplatte und damit der Verbindung zwischen Sonotrode und Schlitten mehr Stabilität verliehen.

In einer bevorzugten Ausführungsform sind die beiden Plattenelemente parallel zueinander angeordnet, wobei sie vorzugsweise in einer Richtung senkrecht zur Plattenebene zueinander versetzt angeordnet sind und am besten ein Plattenelement eine Ausnehmung aufweist, in der das andere Plattenelement angeordnet ist.

Dabei kann die Ausnehmung prinzipiell beliebig ausgebildet sein. So ist beispielsweise eine O-förmige Ausnehmung denkbar, d.h. ein äußeres Plattenelement umgibt das innerhalb der O-förmigen Ausnehmung angeordnete innere Plattenelemente vollumfänglich. Stattdessen wäre jedoch auch eine U-förmige Ausnehmung, bei der das äußere Plattenelement das innere Plattenelement nur an drei Seiten umgibt, oder eine L-förmige Ausnehmung, bei der das äußere Plattenelement das innere Plattenelement nur an zwei Seiten umgibt, denkbar.

Um ein gutes Schweißergebnis zu erzielen, ist grundsätzlich eine hohe Steifigkeit der Verbindung zwischen Sonotrode und Maschinenständer notwendig. Allerdings erfordert die erfindungsgemäße Anordnung der Sensorplatte eine gewisse Beweglichkeit, da nur dann die Kraft gemessen werden kann. Es hat sich gezeigt, dass die Beweglichkeit der beiden Plattenelemente zueinander sowohl in Kraftrichtung als auch in einer Richtung, senkrecht zur Kraftrichtung kleiner als 20µm/kN, vorzugweise kleiner als 10 µm/kN und am besten kleiner als 3 µm/kN sein sollte.

Der Kraftsensor kann in einer bevorzugten Ausführungsform einen Dehnungsmessstreifen aufweisen, der die Verformung der Verbindungselemente misst und daraus Rückschlüsse auf die Kraft erlaubt, die von der Materialbahn auf die Sonotrode ausgeübt wird.

In einer weiteren bevorzugten Ausführungsform ist der Kraftsensor ein piezoelektrischer Sensor.

Da die Steifigkeit von Piezosensoren im Vergleich zu den auf Dehnungsmessstreifen basierenden Kraftsensoren um einen Faktor 70 bis 100 größer ist, kann durch die Verwendung eines piezoelektrischen Sensors als Kraftsensor die Beweglichkeit der beiden Plattenelemente zueinander zumindest in Kraftrichtung noch weiter reduziert werden.

Allein durch die Verwendung von Piezosensoren als Kraftsensor kann daher die Elastizität des Systems erheblich reduziert werden.

Piezosensoren haben jedoch das Problem, dass es aufgrund des Aufbaus der Piezosensoren bzw. der damit verbundenen Verwendung eines Ladungsverstärkers zur Messung der vom Piezokristall bereitgestellten Ladung immer zu einer Entladung kommt, so dass die von dem Ladungsverstärker gemessene Ladung, die in eine elektrische Spannung umgewandelt wird, bei statischen Messungen abnimmt.

Um daher die Messergebnisse des Piezosensors zu verbessern, kann in einer bevorzugten Ausführungsform eine Steuerungsvorrichtung vorgesehen sein, die entweder, wenn das Ultraschallbearbeitungssystem keine Materialbearbeitung durchführt, den piezoelektrischen Sensor kurzschließt, oder zu der von dem Piezosensor gemessenen Kraft einen zeitlich variierenden Kraftkompensationswert addiert.

So ist es beispielsweise möglich, ab und an den Piezosensor kurzzuschließen, und zwar in einem Moment, in dem die Sonotrode nicht im Materialeingriff ist, d. h. in einem Moment, in dem keine Verschweißung stattfindet. In diesem Moment übt die Sonotrode keine oder lediglich eine geringe Kraft auf den Materialbahnen aus. Durch das Kurzschließen wird der Piezosensor sozusagen genullt, so dass nach dem Kurzschlussvorgang lediglich Kraftänderungen gemessen werden können.

Da der piezoelektrische Sensor nun nicht auf einem Dehnungsmessstreifen beruht, wird er vorzugsweise auch nicht an den Verbindungselementen befestigt. Beispielsweise kann der piezoelektrische Sensor an den beiden Plattenelementen der Sensorplatte befestigt sein, so dass die Kraft, die das eine Plattenelement auf das andere Plattenelement ausübt, erfasst wird. Dabei ist der piezoelektrische Sensor derart mit den beiden Plattenelementen verbunden, dass der Großteil des Kraftflusses über den Piezosensor abgeleitet wird.

In einer weiteren bevorzugten Ausführungsform ist vorgesehen, dass der piezoelektrische Sensor derart vorgespannt ist, dass der piezoelektrische Sensor selbst dann eine Kraft misst, wenn keine Kraft von der Materialbahn auf die Sonotrode ausgeübt wird.

Dies kann beispielsweise dadurch erfolgen, dass der Piezosensor mit Hilfe von Schrauben, die entsprechende Durchgangsgewindebohrungen des ersten Plattenelementes durchgreifen auf das zweite Plattenelement gedrückt wird. Dadurch wird in jedem Fall eine Kraft auf den Piezosensor ausgeübt. Dies kann insbesondere dann von Vorteil sein, wenn es zu Nachschwingungen der Sonotrode kommt, da dann am Piezosensor nicht nur Druck-, sondern auch Zugkräfte auftreten. Durch die entsprechende Vorspannung können nun auch "negative Kräfte" gemessen werden.

In einer bevorzugten Ausführungsform ist der piezoelektrische Sensor derart am Sensorbauteil angeordnet, dass die von dem zu bearbeiteten Material parallel zur Kraftrichtung auf die Sonotrode aufgebrachte Kraft gemessen wird.

Selbstverständlich ist es auch möglich, die von dem zu bearbeitenden Material senkrecht zur Kraftrichtung auf die Sonotrode aufgebrachte Kraft zu messen. Dies kann beispielsweise mit Hilfe eines zweiten Sensors erfolgen. Hierbei hat sich jedoch gezeigt, dass für den Sensor, der die von dem zu bearbeitenden Material senkrecht zur Kraftrichtung auf die Sonotrode aufgebrachte Kraft verwendet wird, vorzugsweise ein Dehnungsmessstreifen verwendet wird, der an dem Verbindungselement und zwar vorzugsweise an dem Verbindungselement, welches näher am Gegenwerkzeug angeordnet ist, positioniert ist.

Weitere Vorteile der vorliegenden Erfindung werden deutlich anhand der folgenden Beschreibung einer bevorzugten Ausführungsform und der zugehörigen Figuren. Es zeigen:
- Figur 1: eine perspektivische Ansicht einer erfindungsgemäßen Ausführungsform,
- Figur 2: eine Schnittansicht der Ausführungsform von Figur 1,
- Figuren 3, 3a, 3b: eine perspektivische Ansicht und Detailvergrößerungen eines Sensorbauteils, wie es in der in den Figuren 1 und 2 gezeigten Ausführungsform zum Einsatz kommt,
- Figur 4: eine perspektivische Ansicht des Sensorbauteils von Figur 4 während einer Verformung in Längsrichtung,
- Figur 5: eine perspektivische Ansicht des Sensorbauteils von Figur 3 während einer Verformung durch eine Querkraft,
- Figuren 6 und 6a: eine Draufsicht bzw. eine vergrößerte Teilansicht einer zweiten erfindungsgemäßen Ausführungsform,
- Figur 7: eine Draufsicht auf einen piezoelektrischen Sensor,
- Figuren 8 und 8a: eine Rückansicht und eine vergrößerte Teilansicht der zweiten erfindungsgemäßen Ausführungsform und
- Figur 9: eine Seitenansicht der zweiten erfindungsgemäßen Ausführungsform.

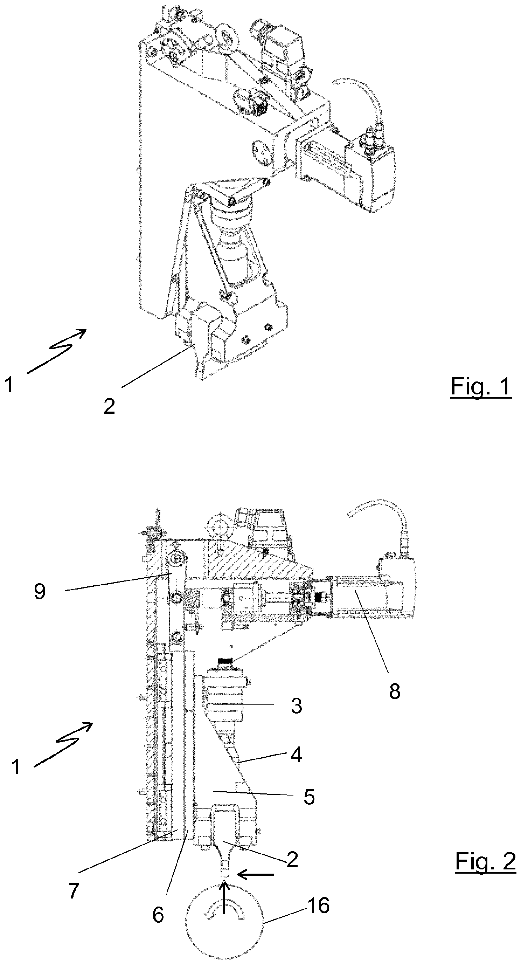

Figur 1 zeigt eine perspektivische Ansicht einer erfindungsgemäßen Bearbeitungsvorrichtung 1.

In Figur 2 ist eine lokal geschnittene Seitenansicht von Figur 1 dargestellt. Die Vorrichtung weist eine Sonotrode 2 auf, die über einen Amplitudentransformator 4 mit dem Konverter 3 verbunden ist. Die Ultraschallschwingeinheit, welche aus der Sonotrode 2, dem Amplitudentransformator 4 und dem Konverter 3 besteht, ist in einem Halter 5 befestigt. Der Halter 5 wiederum ist über das als Sensorplatte ausgebildete Sensorbauteil 6 mit einem Schlitten 7 befestigt. Der Schlitten 7 kann relativ zu dem Maschinenständer in vertikaler Richtung bewegt werden. Zu diesem Zweck ist der Schlitten 7 über einen Kniehebelmechanismus 9 mit einem Antriebsmotor 8 verbunden. Der Antriebsmotor 8 bewegt die mit diesem verbundene Gewindestange, welche wiederum über den Kniehebelmechanismus 9 zu einer Vertikalbewegung des Schlittens 7 führt.

In Figur 2 ist schematisch ein walzenförmiges Gegenwerkzeug 16 dargestellt. Die Materialbahn bzw. die Materialbahnen werden zur Bearbeitung zwischen Sonotrode 2 und dem sich um seine Achse drehenden Gegenwerkzeug 16 hindurchgeführt. Dabei übt das zu bearbeitende Material auf die Sonotrode 2 sowohl eine Kraft in Kraftrichtung, die eigentliche Schweißkraft, als auch eine Kraft quer zur Kraftrichtung, die im Wesentlichen durch die Vorwärtsbewegung des Materials durch den Spalt zwischen Sonotrode 2 und Gegenwerkzeug 16 verursacht wird, aus, wie durch die Pfeile in Figur 2 dargestellt ist.

Erfindungsgemäß ist ein Kraftsensor innerhalb der Sensorplatte 6 vorgesehen.

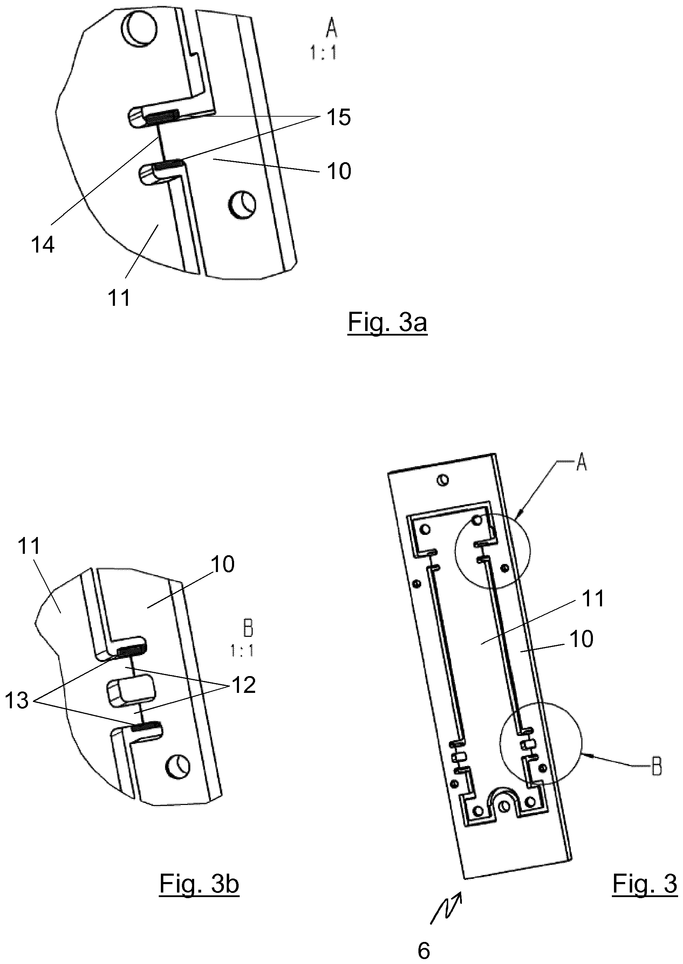

Die Sensorplatte ist in den Figuren 3, 3a und 3b in einer perspektivischen Ansicht sowie in zwei Detailansichten dargestellt. Die Sensorplatte 6 besteht aus einem äußeren Plattenelement 10 und einem inneren Plattenelement 11. Die beiden Plattenelemente sind nahezu in einer Ebene angeordnet, sodass das äußere Plattenelement 10 das innere Plattenelement 11 im Wesentlichen vollständig umgibt.

Sowohl das innere als auch das äußere Plattenelement 10, 11 weisen Befestigungslöcher auf. Eines der beiden Plattenelemente, zum Beispiel das innere Plattenelement 11, wird an dem Schlitten 7 befestigt, während das andere Plattenelement, zum Beispiel das äußere Plattenelement 10, am Halter 5 befestigt wird. Die beiden Plattenelemente 10, 11 sind über Verbindungselemente 13, 14 miteinander verbunden.

Allerdings sind in der gezeigten Ausführungsform die beiden Plattenelemente geringfügig zueinander versetzt angeordnet, d. h. sie liegen nicht exakt in einer Ebene. Solch ein Ausgestaltung ermöglicht eine Befestigung an Schlitten und Sonotrode, welche sicherstellt, dass jeglicher Kraftübertrag, der von der Kraft von der Materialbahn hervorgerufen wird, einzig und allein über die Verbindungselemente 12, 14 erfolgt.

In Figur 3a ist eine Vergrößerung des Details A aus Figur 3 gezeigt. Man erkennt dort das Verbindungselement 14, welches das innere Plattenelement 11 mit dem äußeren Plattenelement 10 verbindet. An diesem Verbindungselement 14 sind hier zudem zwei Kraftsensoren in Form von Dehnungsmessstreifen 15 angeordnet.

In Figur 3b ist eine Ansicht des Details B aus Figur 3 dargestellt. Man erkennt hier, dass zwei Verbindungselemente 12 das innere Plattenelement 11 mit dem äußeren Plattenelement 10 verbinden. Auch hier sind jedem Verbindungselement 12 Kraftsensoren 13 zugeordnet. Das Sensorbauteil ist im Wesentlichen spiegelsymmetrisch zu einer Längsachse ausgebildet, d.h. es gibt zwei Verbindungselementpaare, wie sie in Figur 3b dargestellt sind und zwei gegenüberliegende Verbindungselemente 14, wie eines in Figur 3a dargestellt ist.

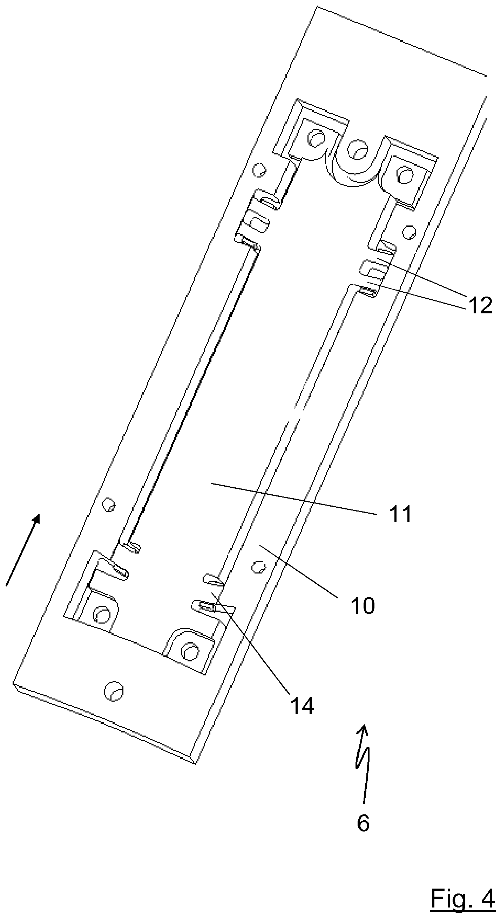

In Figur 4 ist eine schematische Darstellung der Sensorplatte 6 gezeigt, die die Situation bei einer in Längsrichtung bzw. Kraftrichtung auf die Sonotrode aufgebrachten Kraft darstellt. Diese Richtung ist in der Figur durch einen Pfeil gekennzeichnet. Wird auf die Sonotrode 2 eine in Längsrichtung wirkende Kraft von der Materialbahn aufgebracht, so führt dies aufgrund der Verbindung zwischen Sonotrode 2 bzw. Halter 5 mit dem äußeren Plattenelement 10 zu einer Verformung der Verbindungselemente 12, 14. Das innere Plattenelement 11 ist mit dem fest positionierten Schlitten 7 verbunden. Man erkennt insbesondere im Bereich der Verbindungselemente 14, dass diese als Stege ausgebildeten Verbindungselemente verformt werden. Diese Verformung kann mit Hilfe der an den Verbindungselementen 14 angeordneten Kraft-sensoren 15 gemessen werden.

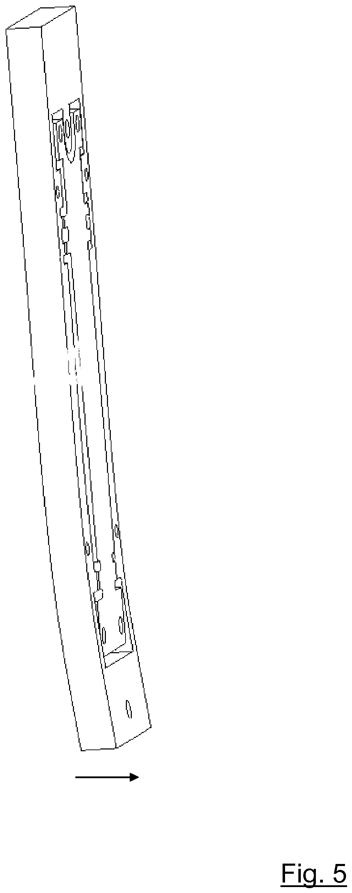

In Figur 5 ist die Situation gezeigt, die auftritt, wenn eine senkrecht zur Kraftrichtung wirkende Kraft auf die Sonotrode aufgebracht wird. Diese Richtung ist in der Figur durch einen Pfeil gekennzeichnet.

Da die Sonotrode 2 über den Halter 5 mit dem äußeren Plattenelement 10 verbunden ist, während das innere Plattenelement 11 mit dem Schlitten 7 verbunden ist, führt eine Kraft senkrecht zur Kraftrichtung auf die Sonotrode zu der in Figur 5 gezeigten Verformung. Diese findet im Wesentlichen im unteren Bereich, d.h. im Bereich der Verbindungselemente 14, statt, da aufgrund der Hebelwirkung dort der größte Kraftübertrag stattfindet. Mit den an den Verbindungselementen 14 befestigten Kraftsensoren 15 lassen sich somit im Wesentlichen Querkräfte messen, während mit Hilfe der an den Verbindungselementen 12 befestigten Kraftsensoren 13 sich im Wesentlichen in Kraftrichtung wirkende Kräfte messen lassen.

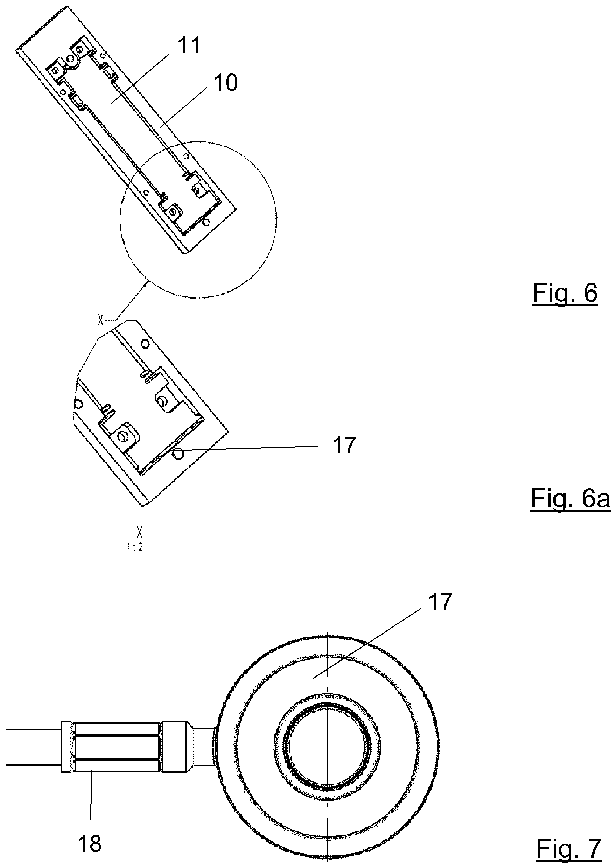

In den Figuren 6 bis 9 ist eine zweite erfindungsgemäße Ausführungsform dargestellt, bei der als Kraftsensor ein piezoelektrischer Sensor 17 verwendet wird. In Figur 6 ist eine Draufsicht auf diese Ausführungsform gezeigt. Auch hier weist die Sensorplatte zwei Plattenelemente 10, 11 auf. In der in Figur 6a vergrößert dargestellten Teilansicht ist zu erkennen, dass in Längsrichtung der Sensorplatte zwischen dem inneren Plattenelement 11 und dem äußeren Plattenelement 10 ein Piezosensor 17 angeordnet ist. Der Piezosensor 17 ist schematisch in Figur 7 gezeigt. Er besteht aus entsprechenden Piezoscheiben und einem Anschluss 18 über den die von den Piezokristallen erzeugte Ladung gemessen werden kann.

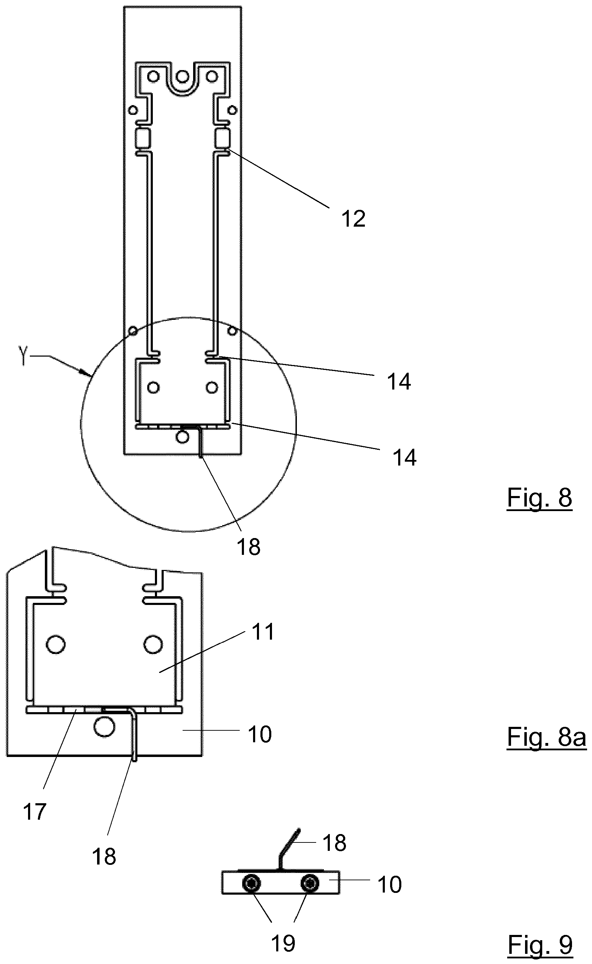

In den Figuren 8 und 8a ist eine Rückansicht der Ausführungsform dargestellt. Man erkennt hier, dass der Anschluss 18 entlang des äußeren Plattenelementes 10 geführt wird. Das innere Plattenelement ist mit Hilfe von Festkörpergelenken 12, 14 an dem äußeren Plattenelement 10 befestigt. Die Festkörpergelenke bzw. Verbindungsabschnitte sorgen für eine Formstabilität. Insbesondere in der Kraftrichtung ist jedoch durch die Anordnung sichergestellt, dass der überwiegende Teil des Kraftflusses über den Piezosensor erfolgt.

Schließlich ist in Figur 9 eine Ansicht von unten dargestellt. Man erkennt zwei Schrauben 19, die in entsprechenden Durchgangsgewindebohrungen des äußeren Plattenelementes 10 geführt sind. Sie durchgreifen das äußere Plattenelement 10 und drücken den Piezosensor 17 gegen das innere Plattenelement 11, wodurch sichergestellt ist, dass immer eine Kraft auf dem Piezosensor ausgeübt wird.

Der Piezosensor muss nach der Montage des Sensors kalibriert werden.

### Bezugszeichenliste

- 1: Bearbeitungsvorrichtung
- 2: Sonotrode
- 3: Konverter
- 4: Amplitudentransformator
- 5: Halter
- 6: Sensorplatte / Sensorbauteil
- 7: Schlitten
- 8: Antriebsmotor
- 9: Kniehebelmechanismus
- 10: äußeres Plattenelement
- 11: inneres Plattenelement
- 12, 14: Verbindungselement
- 13, 15: Kraftsensoren
- 16: Gegenwerkzeug
- 17: Piezosensor
- 18: Anschluß
- 19: Schraube

## Patentansprüche

1. Vorrichtung zum Ultraschallbearbeiten einer Materialbahn mit einer Ultraschallschwingeinheit, die eine Sonotrode (2) und einen gegebenenfalls über einen Amplitudentransformator (4) mit dieser verbundenen Konverter (8) aufweist, und einem Gegenwerkzeug (16), wobei zur Bearbeitung der Materialbahn diese durch einen Spalt zwischen Sonotrode (2) und Gegenwerkzeug (16) bewegt wird, wobei die Ultraschallschwingeinheit an einem Schlitten (7) befestigt ist, welcher relativ zu dem Gegenwerkzeug (16) bewegbar ist, so dass die Ultraschallschwingeinheit zusammen mit dem Schlitten (7) in Kraftrichtung, d.h. in Richtung des Gegenwerkzeuges (16) oder von diesem weg bewegt werden kann, wobei ein Kraftsensor (13, 15) zum Messen der von der Materialbahn auf die Sonotrode (2) aufgebrachten Kraft vorgesehen ist, wobei Sonotrode (2) und Schlitten (7) über ein Sensorbauteil (6) miteinander verbunden sind, welches den Kraftsensor (13, 15) aufweist, **dadurch gekennzeichnet, dass** das Sensorbauteil (6) aus zwei über mindestens zwei Verbindungselemente miteinander verbundene Plattenelementen (10, 11) besteht, wobei ein Plattenelement mit der Ultraschallschwingeinheit und das andere Plattenelement mit dem Schlitten (7) verbunden ist, wobei der mindestens eine Kraftsensor (13, 15) an einem Verbindungselement (12, 14) befestigt ist.

2. Vorrichtung nach Anspruch 1, **dadurch gekennzeichnet, dass** Sonotrode (2) und Schlitten über ein zwei Kraftsensoren aufweisendes Sensorbauteil (6) miteinander verbunden sind, wobei ein Kraftsensor (13) derart angeordnet ist, dass die von dem zu bearbeitenden Material parallel zur Kraftrichtung auf die Sonotrode (2) aufgebrachte Kraft gemessen wird, und der andere Kraftsensor (15) derart angeordnet ist, dass die von dem zu bearbeitenden Material senkrecht zur Kraftrichtung auf die Sonotrode aufgebrachte Kraft gemessen wird.

3. Vorrichtung nach Anspruch 1 oder 2, **dadurch gekennzeichnet, dass** ein Antrieb zum Bewegen des Schlittens (7) parallel zur Kraftrichtung vorgesehen ist, wobei vorzugsweise der Antrieb über ein Kraftumlenkungssystem, wie zum Beispiel ein Kniehebelsystem (9), mit dem Schlitten (7) verbunden ist.

4. Vorrichtung nach einem der Ansprüche 1 bis 3, **dadurch gekennzeichnet, dass** das eine Verbindungselement näher am Gegenwerkzeug (16) angeordnet ist als das andere Verbindungselement, wobei vorzugweise zwei Kraftsensoren vorgesehen sind und ein Kraftsensor (13) derart am Verbindungselement, welches weiter von dem Gegenwerkzeug entfernt angeordnet ist, positioniert ist, dass die von dem zu bearbeitenden Material parallel zur Kraftrichtung auf die Sonotrode (2) aufgebrachte Kraft gemessen wird, und der andere Kraftsensor (15) derart am Verbindungselement, welches näher am Gegenwerkzeug (16) angeordnet ist, positioniert ist, dass die von dem zu bearbeitenden Material senkrecht zur Kraftrichtung auf die Sonotrode (2) aufgebrachte Kraft gemessen wird.

5. Vorrichtung nach einem der Ansprüche 1 bis 4, **dadurch gekennzeichnet, dass** mindestens vier Verbindungselemente, über die die Plattenelemente miteinander verbunden sind, vorgesehen sind, wobei jeweils zwei Verbindungselemente vom Gegenwerkzeug (16) gleich beabstandet sind.

6. Vorrichtung nach einem der Ansprüche 1 bis 5, **dadurch gekennzeichnet, dass** die beiden Plattenelemente im Wesentlichen in derselben Ebene angeordnet sind, wobei vorzugsweise ein Plattenelement eine Ausnehmung aufweist, in der das andere Plattenelement angeordnet ist.

7. Vorrichtung nach einem der Ansprüche 1 bis 6, **dadurch gekennzeichnet, dass** der Kraftsensor einen Dehnungsmessstreifen aufweist.

8. Vorrichtung nach einem der Ansprüche 1 bis 7, **dadurch gekennzeichnet, dass** die Beweglichkeit der beiden Plattenelemente zueinander sowohl in Kraftrichtung als auch in einer Richtung, senkrecht zur Kraftrichtung kleiner als 20µm/kN, vorzugweise kleiner als 10 µm/kN und am besten kleiner als 3 µm/kN ist.

9. Vorrichtung nach einem der Ansprüche 1 bis 8, **dadurch gekennzeichnet, dass** der Kraftsensor ein piezoelektrischer Sensor ist.

10. Vorrichtung nach Anspruch 9, **dadurch gekennzeichnet, dass** der piezoelektrischer Sensor an beiden Plattenelementen befestigt ist, so dass die Kraft, die das eine Plattenelement auf das andere Plattenelement ausübt, erfasst wird, wobei vorzugsweise der piezoelektrische Sensor derart vorgespannt ist, dass der piezoelektrische Sensor selbst dann eine Kraft misst, wenn keine Kraft von der Materialbahn auf die Sonotrode (2) ausgeübt wird.

11. Vorrichtung nach Anspruch 9 oder 10, **dadurch gekennzeichnet, dass** der piezoelektrische Sensor derart am Sensorbauteil angeordnet ist, dass die von dem zu bearbeitenden Material parallel zur Kraftrichtung auf die Sonotrode (2) aufgebrachte Kraft gemessen wird.

12. Vorrichtung nach einem der Ansprüche 10 bis 11, **dadurch gekennzeichnet, dass** zwei Kraftsensoren vorgesehen sind, wobei ein Kraftsensor ein piezoelektrischer Sensor (17) ist, der derart an der Sensorplatte (6) befestigt ist, dass die von dem zu bearbeitenden Material parallel zur Kraftrichtung auf die Sonotrode (2) aufgebrachte Kraft gemessen wird, und der andere Kraftsensor, welcher vorzugsweise Dehnungsmessstreifen aufweist, derart an einem Verbindungselement, und zwar vorzugsweise an dem Verbindungselement, welches näher am Gegenwerkzeug (16) angeordnet ist, positioniert ist, dass die von dem zu bearbeitenden Material senkrecht zur Kraftrichtung auf die Sonotrode (2) aufgebrachte Kraft gemessen wird.

## Claims

1. Apparatus for ultrasonic processing of a material web having an ultrasonic vibration unit which has a sonotrode (2) and a converter (8) connected thereto optionally by way of an amplitude transformer (4), and a counterpart tool (16), wherein for processing of the material web the web is moved through a gap between the sonotrode (2) and the counterpart tool (16), wherein the ultrasonic vibration unit is fixed to a carriage (7) moveable relative to the counterpart tool (16) so that the ultrasonic vibration unit can be moved together with the carriage (7) in the force direction, that is to say in the direction of or away from the counterpart tool (16), wherein there is provided a force sensor (13, 15) for measuring the force applied to the sonotrode (2) by the material web, wherein the sonotrode (2) and the carriage (7) are connected together by way of a sensor component (6) which has the force sensor (13, 15), **characterised in that** the sensor component (6) comprises two plate elements (10, 11) connected together by way of at least two connecting elements, wherein one plate element is connected to the ultrasonic vibration unit and the other plate element is connected to the carriage (7), wherein the at least one force sensor (13, 15) is fixed to a connecting element (12, 14).

2. Apparatus as set forth in claim 1 **characterised in that** the sonotrode (2) and the carriage are connected together by way of a sensor component (6) having two force sensors, wherein one force sensor (13) is so arranged that the force applied to the sonotrode (2) parallel to the force direction by the material to be processed is measured and the other force sensor (15) is so arranged that the force applied to the sonotrode perpendicularly to the force direction by the material to be processed is measured.

3. Apparatus as set forth in claim 1 or claim 2 **characterised in that** there is provided a drive for moving the carriage (7) parallel to the force direction, wherein preferably the drive is connected to the carriage (7) by way of a force deflection system like for example a toggle lever system (9).

4. Apparatus as set forth in one of claims 1 through 3 **characterised in that** the one connecting element is arranged closer to the counterpart tool (16) than the other connecting element, wherein preferably there are provided two force sensors and one force sensor (13) is positioned on the connecting element which is arranged further away from the counterpart tool in such a way that the force applied to the sonotrode (2) parallel to the force direction by the material to be processed is measured and the other force sensor (15) is positioned on the connecting element which is arranged closer to the counterpart tool (16) in such a way that the force applied to the sonotrode (2) perpendicularly to the force direction by the material to be processed is measured.

5. Apparatus as set forth in one of claims 1 through 4 **characterised in that** there are provided at least four connecting elements, by way of which the plate elements are connected together, wherein two respective connecting elements are equally spaced from the counterpart tool (16).

6. Apparatus as set forth in one of claims 1 through 5 **characterised in that** the two plate elements are arranged substantially in the same plane, wherein preferably one plate element has an opening in which the other plate element is arranged.

7. Apparatus as set forth in one of claims 1 through 6 **characterised in that** the force sensor has a strain gauge.

8. Apparatus as set forth in one of claims 1 through 7 **characterised in that** the mobility of the two plate elements relative to each other both in the force direction and also in a direction perpendicularly to the force direction is less than 20µm/kN, preferably less than 10µm/kN and best less than 3µm/kN.

9. Apparatus as set forth in one of claims 1 through 8 **characterised in that** the force sensor is a piezoelectric sensor.

10. Apparatus as set forth in claim 9 **characterised in that** the piezoelectric sensor is fixed to both plate elements so that the force which the one plate element exerts on the other plate element is detected, wherein preferably the piezoelectric sensor is biased in such a way that the piezoelectric sensor measures a force even when no force is exerted on the sonotrode (2) by the material web.

11. Apparatus as set forth in claim 9 or claim 10 **characterised in that** the piezoelectric sensor is arranged on the sensor component in such a way that the force applied to the sonotrode (2) parallel to the force direction by the material to be processed is measured.

12. Apparatus as set forth in one of claims 10 through 11 **characterised in that** there are provided two force sensors, wherein one force sensor is a piezoelectric sensor (17) which is so fixed to the sensor plate (6) that the force applied to the sonotrode (2) parallel to the force direction by the material to be processed is measured and the other force sensor which preferably has strain gauges is so positioned on a connecting element and more specifically preferably on the connecting element which is arranged closer to the counterpart tool (16) that the force applied to the sonotrode (2) perpendicularly to the force direction by the material to be processed is measured.

## Revendications

1. Dispositif d'usinage par ultrasons d'une bande de matériau, comprenant une unité émettrice d'ultrasons qui comporte une sonotrode (2) et un convertisseur (8) relié à celle-ci, le cas échéant par le biais d'un transformateur d'amplitude (4), et un contre-outil (16),
dans lequel, pour l'usinage de la bande de matériau, celle-ci est déplacée à travers un entrefer entre la sonotrode (2) et le contre-outil (16), l'unité émettrice d'ultrasons étant fixée à un chariot (7) qui est déplaçable par rapport au contre-outil (16) de sorte que l'unité émettrice d'ultrasons peut être déplacée conjointement avec le chariot (7) dans le sens de la force, à savoir en direction du contre-outil (16) ou éloignée de celui-ci, un capteur de force (13, 15) étant prévu pour mesurer la force appliquée sur la sonotrode (2) par la bande de matériau, sonotrode (2) et chariot (7) étant reliés entre eux par l'intermédiaire d'un composant de détection (6) qui comprend le capteur de force (13, 15), **caractérisé en ce que** le composant de détection (6) se compose de deux éléments plaques (10, 11) reliés entre eux par l'intermédiaire d'au moins deux éléments de liaison, un élément plaque étant relié à l'unité émettrice d'ultrasons et l'autre élément plaque étant relié au chariot (7), le capteur de force (13, 15), au moins au nombre de un, étant fixé sur un élément de liaison (12, 14).

2. Dispositif selon la revendication 1, **caractérisé en ce que** la sonotrode (2) et le chariot sont reliés entre eux par l'intermédiaire d'un composant de détection (6) comportant deux capteurs de force, un capteur de force (13) étant disposé de manière à mesurer la force appliquée sur la sonotrode (2) parallèlement au sens de la force par le matériau à usiner, et l'autre capteur (15) étant disposé de manière à mesurer la force appliquée sur la sonotrode perpendiculairement au sens de la force par le matériau à usiner.

3. Dispositif selon la revendication 1 ou 2, **caractérisé en ce qu'**est prévu un entraînement pour déplacer le chariot (7) parallèlement au sens de la force, l'entraînement étant de préférence relié au chariot (7) par l'intermédiaire d'un système de déviation de force, tel que par ex. un système à genouillère (9).

4. Dispositif selon l'une des revendications 1 à 3, **caractérisé en ce qu'**un élément de liaison est disposé plus près du contre-outil (16) que l'autre élément de liaison, suite à quoi deux capteurs de force sont de préférence prévus, un capteur de force (13) étant positionné sur l'élément de liaison qui est plus éloigné du contre-outil de façon à mesurer la force appliquée sur la sonotrode (2) parallèlement au sens de la force par le matériau à usiner, et l'autre capteur de force (15) étant positionné sur l'élément de liaison plus proche du contre-outil (16) de façon à mesurer la force appliquée sur la sonotrode (2) perpendiculairement au sens de la force par le matériau à usiner.

5. Dispositif selon l'une des revendications 1 à 4, **caractérisé en ce que** sont prévus au moins quatre éléments de liaison, reliant entre eux les éléments plaques, deux éléments de liaison étant respectivement équidistants du contre-outil (16).

6. Dispositif selon l'une des revendications 1 à 5, **caractérisé en ce que** les deux éléments plaques sont disposés sensiblement dans le même plan, un élément plaque comportant de préférence un évidement dans lequel est disposé l'autre élément plaque.

7. Dispositif selon l'une des revendications 1 à 6, **caractérisé en ce que** le capteur de force comporte une jauge de contrainte.

8. Dispositif selon l'une des revendications 1 à 7, **caractérisé en ce que** la mobilité des deux éléments plaques l'un par rapport à l'autre dans le sens de la force comme dans une direction perpendiculaire au sens de la force est inférieure à 20 µm/kN, de préférence inférieure à 10 µm/kN, et le plus préférablement inférieure à 3 µm/kN.

9. Dispositif selon l'une des revendications 1 à 8, **caractérisé en ce que** le capteur de force est un capteur piézoélectrique.

10. Dispositif selon la revendication 9, **caractérisé en ce que** le capteur piézoélectrique est fixé sur les deux éléments plaques de façon à détecter la force qu'exerce un élément plaque sur l'autre élément plaque, le capteur piézoélectrique étant de préférence précontraint de façon telle que ledit capteur piézoélectrique lui-même mesure une force lorsque la bande de matériau n'exerce aucune force sur la sonotrode (2).

11. Dispositif selon la revendication 9 ou 10, **caractérisé en ce que** le capteur piézoélectrique est disposé sur le composant de détection de façon à mesurer la force appliquée sur la sonotrode (2) parallèlement au sens de la force par le matériau à usiner.

12. Dispositif selon l'une des revendications 10 à 11, **caractérisé en ce que** sont prévus deux capteurs de force, un capteur de force étant un capteur piézoélectrique (17) qui est fixé sur la plaque de détection (6) de façon à mesurer la force appliquée sur la sonotrode (2) parallèlement au sens de la force par le matériau à usiner, et l'autre capteur de force, qui comporte de préférence une jauge de contrainte, est positionné sur l'élément de liaison, et de préférence sur l'élément de liaison plus proche du contre-outil (16), de façon à mesurer la force appliquée sur la sonotrode (2) perpendiculairement au sens de la force par le matériau à usiner.
